(19) Europäisches Patentamt

European Patent Office

Office européen des brevets

(11) **EP 1 008 919 A1**

## (12) DEMANDE DE BREVET EUROPEEN

(43) Date de publication:
**14.06.2000 Bulletin 2000/24**

(51) Int. Cl.[7]: **G03H 1/08**, G03H 1/26

(21) Numéro de dépôt: **98403111.2**

(22) Date de dépôt: **09.12.1998**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur:
**Communauté Européenne (CE)**
**2920 Luxembourg (LU)**

(72) Inventeurs:
• **Grossetie, Jean-Claude**
  **21027 Ispra (Varese) (IT)**
• **Noirard, Pierre**
  **67640 Lipsheim (FR)**

(74) Mandataire:
**Joly, Jean-Jacques et al**
**Cabinet Beau de Loménie**
**158, rue de l'Université**
**75340 Paris Cédex 07 (FR)**

(54) **Procédé et dispositif holographiques assistés par ordinateur pour restituer des images tridimensionnelles**

(57) Une image tridimensionnelle est mémorisée (E0) dans une mémoire d'ordinateur sous forme de données numériques et définie dans un espace géométrique à trois dimensions. Des images bidimensionnelles sont calculées (E1) en déterminant, dans l'espace géométrique à trois dimensions, les intersections entre une pluralité de plans de coupe parallèles et l'image tridimensionnelle. Des hologrammes sont calculés (E2) respectivement pour les images bidimensionnelles, puis sont reproduits (E3) de façon séquentielle sur un modulateur spatial de lumière éclairé par une source lumineuse cohérente. Une image en trois dimensions transparente est ainsi restituée.

```
IMAGE 3D        E0
     |
     v
IMAGES 2D       E1
     |
     v
CALCUL
HOLOGRAMMES     E2
     |
     v
REPRODUCTION
HOLOGRAMMES     E3
```

FIG.2

EP 1 008 919 A1

**Description**

La présente invention concerne de manière générale la restitution d'images en trois dimensions, et plus particulièrement la synthèse numérique d'hologrammes et la restitution d'images en trois dimensions à partir de ces hologrammes.

Plusieurs techniques de restitution d'images en trois dimensions sont connues.

Certains dispositifs, dits « stéréoscopiques », produisent deux images décalées d'une même scène qui sont chacune vues par un oeil respectif d'un observateur. La profondeur du champ et le volume sont alors reconstruits par le cerveau de l'observateur. La majorité de ces dispositifs nécessitent le port d'accessoires encombrants tels que lunettes ou casques pour séparer et différencier les images que l'on envoie à chaque oeil. En outre, ils ne présentent qu'un angle de vision binoculaire de la scène à représenter.

Une autre technique, dite « autostéréoscopique », consiste, dans un cas particulier, à prendre une photographie d'une scène à travers un maillage plan de lentilles suffisamment petites, de façon à associer à chaque lentille un point de vue de la scène photographiée. La photographie ainsi obtenue donne l'illusion de relief, mais produit un effet de profondeur limité. Cette méthode ne respecte pas l'accommodation oculaire naturelle, et permet difficilement, dans l'état actuel de la technique, la restitution d'images tridimensionnelles en temps réel.

L'holographie est la méthode de restitution d'images tridimensionnelles la plus fidèle, puisqu'elle permet de restituer le champ optique tel qu'il est émis par la scène. Cette méthode respecte notamment parfaitement l'accommodation oculaire. L'holographie analogique consiste à projeter une onde optique cohérente émise par un laser sur un objet, à recueillir à partir de cette onde une onde optique diffusée par l'objet, et à faire interférer cette onde optique diffusée avec une onde de référence constituée par une autre partie du faisceau émis par le laser pour produire un champ d'interférences. Le champ d'interférences est enregistré sur un support photosensible tel qu'une plaque photographique. Une image en trois dimensions de la scène initiale peut alors être observée en éclairant la plaque photographique par une onde cohérente. Cette méthode purement analogique offre une excellente qualité de restitution, mais ne permet pas la restitution d'images tridimensionnelles en temps réel.

Des méthodes holographiques numériques destinées à produire des images tridimensionnelles en temps réel existent. Le brevet américain US 5 668 648 décrit un dispositif holographique assisté par ordinateur capable de synthétiser numériquement l'hologramme d'un objet virtuel et de restituer une image à partir de cet hologramme. L'objet virtuel est échantillonné en des points d'échantillonnage, qui sont considérés comme autant de sources optiques sphériques élémentaires.

Des champs de diffraction sont calculés respectivement pour ces points d'échantillonnage, puis sont superposés. Une technique d'interpolation est utilisée pour améliorer la résolution du champ de diffraction résultant. Un champ d'interférences, ou hologramme, est alors généré en fonction du champ de diffraction résultant et de données représentatives d'une onde de référence, pour être reproduit physiquement par un modulateur spatial de lumière.

La synthèse numérique d'hologramme selon la méthode ci-dessus nécessite des calculs longs et compliqués, notamment pour déterminer un champ de diffraction associé à chaque point d'échantillonnage de l'objet et pour interpoler le champ de diffraction résultant.

La présente invention vise à fournir un procédé holographique capable d'assurer une restitution spatiale tridimensionnelle d'images de manière efficace et en temps réel.

A cette fin, il est prévu un procédé pour restituer au moins une partie d'une image tridimensionnelle, ladite image tridimensionnelle étant représentée par des données numériques et définie dans un espace géométrique à trois dimensions, caractérisé en ce qu'il comprend les étapes suivantes :

produire par calcul un ensemble d'images bidimensionnelles obtenues par détermination, dans l'espace géométrique à trois dimensions, des intersections respectives entre une pluralité de plans de coupe et l'image tridimensionnelle,

produire par calcul un hologramme pour chacune des images bidimensionnelles, et

reproduire successivement les hologrammes des images bidimensionnelles sur un modulateur spatial de lumière éclairé par une source lumineuse.

La présente invention trouve une application particulièrement adaptée dans le domaine médical. En effet, l'image tridimensionnelle restituée selon le procédé ci-dessus est transparente, ce qui permet la visualisation de l'intérieur d'organes. D'autres applications peuvent toutefois être envisagées, notamment dans les domaines de l'imagerie grand public (télévision, cinéma) ou les télécommunications.

Typiquement, la source lumineuse est une source monochromatique spatialement cohérente émettant à une longueur d'onde prédéterminée, et les hologrammes des images bidimensionnelles sont calculés pour ladite longueur d'onde.

Avantageusement, le modulateur spatial de lumière est un écran à cristaux liquides ayant un pas de pixels (en anglais : pitch) inférieur à 10 µm et de préférence voisin de 1 µm suivant au moins deux directions distinctes. Par « pas de pixels », on entend la période de reproduction des pixels suivant une direction donnée, qui correspond, pour chaque pixel, à la somme de la dimension du pixel suivant la direction donnée et de la distance séparant ce pixel d'un pixel adjacent suivant cette même direction. La distance entre deux pixels est choisie pour être la plus petite possible et de préférence sensiblement nulle. Les deux directions distinctes précitées correspondent respectivement à des lignes et colonnes de pixels sur l'écran à cristaux liquides.

Afin de restituer l'image tridimensionnelle de manière fidèle, les plans de coupe sont de préférence parallèles entre eux.

Ladite étape de reproduire successivement les hologrammes consiste à reproduire sur le modulateur spatial de lumière, de manière répétée, une séquence constituée par les hologrammes. Cette séquence a avantageusement une durée n'excédant pas 50 ms, de sorte qu'un observateur puisse visualiser sans effort l'image en trois dimensions par fusion mentale.

Selon l'invention, à ladite étape de produire par calcul un hologramme pour chacune des images bidimensionnelles, les hologrammes des images bidimensionnelles sont calculés dans un plan prédéterminé situé à une distance finie de la pluralité de plans de coupe et de préférence parallèle à ces derniers. De cette manière, on respecte parfaitement la géométrie et les proportions de l'image tridimensionnelle et on évite que celle-ci soit restituée de façon déformée, ou《 écrasée 》.

Typiquement, les images bidimensionnelles sont définies par des fonctions réelles respectives et ladite étape de produire par calcul un hologramme pour chacune des images bidimensionnelles comprend les étapes suivantes pour une image bidimensionnelle donnée :

> transformer l'image bidimensionnelle donnée définie par la fonction réelle correspondante en une image bidimensionnelle complexe définie par une fonction complexe,
> suréchantillonner l'image complexe,
> simuler la production d'une image diffractée résultant de la diffraction d'une onde optique par l'image complexe suréchantillonnée,
> additionner un champ complexe représentatif d'une onde optique de référence à l'image diffractée résultante, et
> coder des valeurs prises par l'amplitude de la somme dudit champ complexe et de l'image diffractée résultante afin de produire l'hologramme associé à ladite image bidimensionnelle donnée.

Avantageusement, ladite étape de simuler consiste à calculer un produit de convolution, associé à l'image complexe suréchantillonnée, de deux composantes, en appliquant la transformation inverse d'une transformation complexe prédéterminée au produit des transformées complexes respectives desdites deux composantes. La transformation complexe prédéterminée est par exemple l'une des transformations complexes suivantes : transformation de Fourier, transformation de Walsh, transformation de Hankel, transformation de polynômes orthogonaux, transformation de Hadamar, transformation de Karhunen-Loeve, transformation d'ondelettes discrètes en mutirésolution, transformation d'ondelettes adaptatives, et transformation résultant d'une composition d'au moins deux des transformations ci-dessus.

L'image tridimensionnelle peut être une image en couleur. Dans ce cas, le procédé selon l'invention comprend en outre une étape consistant à décomposer chacune des images bidimensionnelles en des images bidimensionnelles de couleur rouge, verte et bleue (RVB) respectivement, ladite étape de produire par calcul un hologramme pour chacune des images bidimensionnelles consistant alors, pour une image bidimensionnelle de couleur rouge, verte ou bleue donnée, à produire un hologramme pour une longueur d'onde correspondant à la couleur de l'image bidimensionnelle donnée, et ladite étape de reproduire successivement les hologrammes consistant à reproduire les hologrammes des images bidimensionnelles successivement sur le modulateur spatial de lumière tandis que ce dernier est éclairé alternativement par des ondes optiques cohérentes de couleur rouge, verte et bleue respectivement en fonction de la couleur pour laquelle l'hologramme reproduit sur le modulateur spatial de lumière a été calculé.

L'invention concerne également un procédé pour restituer un film vidéo en trois dimensions constitué par une séquence d'images tridimensionnelles représentées par des données numériques, caractérisé en ce qu'il consiste à appliquer à chaque image tridimensionnelle de ladite séquence le procédé défini ci-dessus, de telle sorte que, pour chaque image tridimensionnelle, des hologrammes correspondant à cette image soient reproduits successivement sur un modulateur spatial de lumière pendant un cycle d'image prédéterminé.

La présente invention concerne également un dispositif pour restituer au moins une partie d'une image tridimensionnelle, ladite image tridimensionnelle étant représentée par des données numériques et définie dans un espace géométrique à trois dimensions, caractérisé en ce qu'il comprend:

> un moyen pour mémoriser l'image tridimensionnelle,
> un moyen pour produire par calcul un ensemble d'images bidimensionnelles obtenues par détermination, dans l'espace géométrique à trois dimensions, des intersections respectives entre une pluralité de plans de coupe et l'image tridimensionnelle,
> un moyen pour produire par calcul un hologramme pour chacune des images bidimensionnelles,
> un modulateur spatial de lumière pour reproduire successivement les hologrammes des images bidimensionnelles, et

une source lumineuse pour éclairer le modulateur spatial de lumière lors de la reproduction par ce dernier desdits hologrammes.

Ledit moyen pour produire par calcul un hologramme pour chacune des images bidimensionnelles comprend typiquement un moyen pour calculer les hologrammes des images bidimensionnelles dans un plan prédéterminé situé à une distance finie de la pluralité de plans de coupe et de préférence parallèle à ces derniers.

De manière plus précise, ledit moyen pour produire par calcul un hologramme pour chacune des images bidimensionnelles comprend:

un moyen pour transformer une image bidimensionnelle donnée définie par la fonction réelle correspondante en une image bidimensionnelle complexe définie par une fonction complexe,
un moyen pour suréchantillonner l'image complexe,
un moyen pour simuler la production d'une image diffractée résultant de la diffraction d'une onde optique par l'image complexe suréchantillonnée,
un moyen pour additionner un champ complexe représentatif d'une onde optique de référence à l'image diffractée résultante, et
un moyen pour coder des valeurs prises par l'amplitude de la somme dudit champ complexe et de l'image diffractée résultante afin de produire l'hologramme associé à ladite image bidimensionnelle donnée.

Ledit moyen pour simuler la production d'une image diffractée peut comprendre un moyen pour calculer un produit de convolution, associé à l'image complexe suréchantillonnée, de deux composantes, en appliquant la transformation inverse d'une transformation complexe prédéterminée au produit des transformées complexes respectives desdites deux composantes.

Lorsque l'image tridimensionnelle est une image en couleur, le dispositif selon l'invention comprend en outre un moyen pour décomposer chacune des images bidimensionnelles en des images bidimensionnelles de couleur rouge, verte et bleue (RVB) respectivement, ledit moyen pour produire par calcul un hologramme pour chacune des images bidimensionnelles comprenant alors un moyen pour produire, pour une image bidimensionnelle de couleur rouge, verte ou bleue donnée, un hologramme pour une longueur d'onde correspondant à la couleur de l'image bidimensionnelle donnée, et le modulateur spatial de lumière reproduisant les hologrammes des images bidimensionnelles successivement tandis qu'il est éclairé alternativement par des sources lumineuses émettant des ondes optiques cohérentes de couleur rouge, verte et bleue respectivement en fonction de la couleur pour laquelle l'hologramme reproduit sur le modulateur spatial de lumière a été calculé.

La présente invention concerne également un dispositif pour restituer un film vidéo en trois dimensions constitué par une séquence d'images tridimensionnelles représentées par des données numériques, caractérisé en ce qu'il comprend un moyen pour appliquer chaque image tridimensionnelle de ladite séquence au dispositif défini ci-dessus, de telle sorte que, pour chaque image tridimensionnelle, des hologrammes correspondant à cette image soient reproduits sur un modulateur spatial de lumière pendant un cycle d'image prédéterminé.

D'autres caractéristiques et avantages de la présente invention apparaîtront à la lecture de la description détaillée suivante faite en référence aux dessins annexés dans lesquels :

-   la figure 1 est un schéma-bloc d'un dispositif holographique selon un premier mode de réalisation de l'invention;
-   la figure 2 est un organigramme d'un algorithme mis en oeuvre par le dispositif de la figure 1 ;
-   la figure 3 est un schéma illustrant une décomposition d'image tridimensionnelle en images bidimensionnelles effectuée par l'algorithme de la figure 2 ;
-   la figure 4 montre de manière schématique une image bidimensionnelle obtenue après la décomposition d'image tridimensionnelle illustrée à la figure 3 ;
-   la figure 5 montre un algorithme utilisé pour mettre en oeuvre une étape de calcul d'hologramme dans l'algorithme illustré à la figure 2 ;
-   la figure 6 est un schéma montrant le suréchantillonnage d'une image bidimensionnelle tel qu'il est mis en oeuvre par l'algorithme de la figure 5 ;
-   la figure 7 illustre la simulation d'une image diffractée à partir d'une image bidimensionnelle;
-   la figure 8 est un schéma en coupe illustrant la restitution d'une image tridimensionnelle selon la présente invention ;
-   la figure 9 est un schéma-bloc d'un dispositif holographique selon un second mode de réalisation de l'invention ;
-   la figure 10 est un organigramme d'un procédé de restitution d'images tridimensionnelles en couleur mis en oeuvre par le dispositif de la figure 9 ; et
-   la figure 11 est un organigramme d'un procédé de restitution d'un film vidéo en trois dimensions selon l'invention.

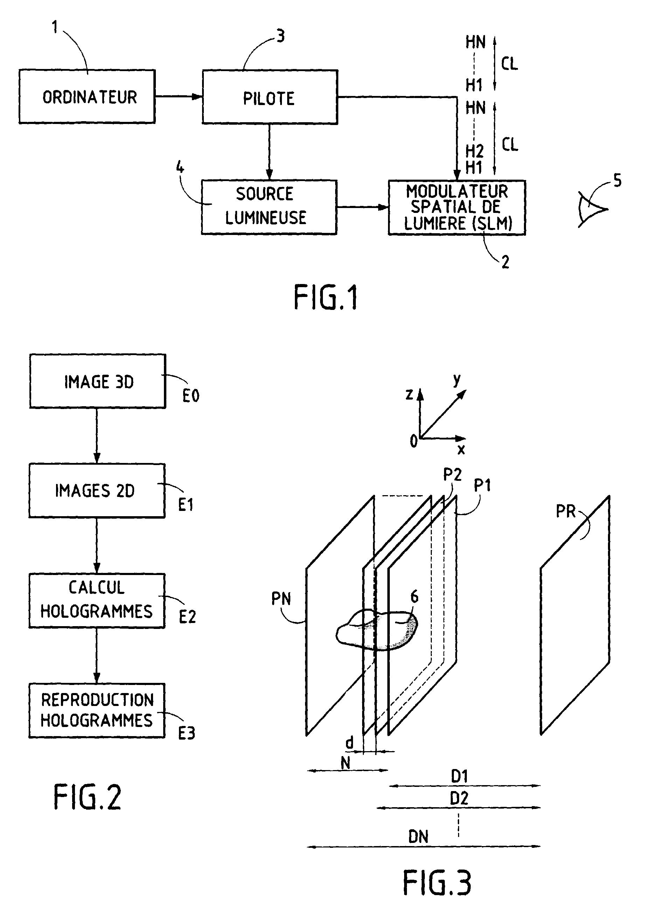

En référence à la figure 1, un dispositif holographique selon un premier mode de réalisation de l'invention comprend un ordinateur 1, un modulateur spatial de lumière 2 (en anglais : Spatial Light Modulator), une interface pilote 3 pour commander le modulateur spatial de lumière 2 en fonction de signaux émis par l'ordinateur 1, et une source lumineuse 4, éventuellement commandée par l'interface pilote 3.

L'ordinateur 1 contient dans une mémoire (non représentée) des données numériques représentatives d'une image tridimensionnelle. Dans la suite de la description, le terme 《 image tridimensionnelle 》 sera utilisé pour désigner une scène tridimensionnelle virtuelle (c'est-à-dire représentée par des données) représentant un ou plusieurs objets ou éléments. Les données numériques précitées comprennent par exemple un ensemble de triplets de coordonnées qui définissent, dans un repère de l'espace à trois dimensions, la position de chaque point des divers objets ou éléments constituant l'image tridimensionnelle. A chaque triplet est associé une intensité ou un niveau de gris. Pour une visualisation réaliste, il est souhaitable d'y ajouter les caractéristiques thermo-optiques du matériau constituant l'objet en question. L'ensemble de ces données constitue les coordonnées phénoménologiques du point. De préférence, les données numériques incluent également des informations de nature volumique. En particulier, chaque objet ou élément de l'image tridimensionnelle est représenté par des points situés sur la surface de l'objet et par des points internes à l'objet. Les données numériques représentatives de l'image tridimensionnelle sont typiquement obtenues de manière classique par conception assistée par ordinateur (CAO), ou par synthèse volumique au moyen d'un modéleur géométrique tridimensionnel associé soit à une méthode de lancer de rayon, soit à une méthode de radiosité, ou toute autre méthode d'acquisition tridimensionnelle.

L'ordinateur 1 contient également dans une mémoire un algorithme de génération d'hologrammes, qui sera décrit plus loin en référence aux figures 2 à 7, pour produire une séquence d'hologrammes numériques associée à l'image tridimensionnelle. L'ordinateur 1 commande le modulateur spatial de lumière 2 par l'intermédiaire du pilote 3 de sorte que la séquence d'hologrammes générée numériquement par l'ordinateur 1 soit reproduite physiquement par le modulateur spatial 2.

La source lumineuse 4 est une source monochromatique spatialement cohérente, capable d'émettre de la lumière cohérente à une longueur d'onde prédéterminée λ, telle qu'un laser ou une source de lumière blanche associée à un filtre dichroïque ou interférentiel. La longueur de cohérence de la source lumineuse 4 est en outre prédéfinie en fonction des dimensions caractéristiques du modulateur spatial de lumière 2, d'une manière connue de l'homme du métier.

Le modulateur spatial 2 comprend un réseau de cellules diffractives commandées pour reproduire physiquement la séquence d'hologrammes numériques précitée et qui diffractent la lumière émise par la source lumineuse 4 afin qu'un observateur 5 placé devant le modulateur spatial 2 puisse observer, grâce à la reconstruction holographique, une image tridimensionnelle. Le modulateur spatial de lumière 2, dit également

《 écran holographique 》 dans l'application particulière de l'holographie, est par exemple un écran à cristaux liquides dont les états permettent soit une modulation d'absorption, soit une modulation du chemin optique, et dont le pas p des pixels (en anglais : pitch) suivant les directions horizontale et verticale est inférieur à 10 μm et de préférence voisin de 1 μm. Le pas p des pixels est défini, suivant la direction horizontale ou verticale, comme la somme de la dimension d'un pixel donné suivant cette direction et de la distance entre le pixel donné et un pixel adjacent suivant cette même direction.

Dans le mode de réalisation montré à la figure 1, la source lumineuse 4 est disposée de façon à éclairer le modulateur spatial 2 en transmission. Toutefois, en variante, la source lumineuse 4 peut être placée du même côté que l'observateur 5 par rapport au modulateur spatial 2, et le modulateur spatial 2 peut être adapté de telle manière que la lumière émise par la source 4 soit diffractée en réflexion.

Les figures 2 à 8 illustrent un procédé de restitution d'images en trois dimensions conforme à l'invention. En particulier, la figure 2 montre un algorithme mis en oeuvre en partie par l'ordinateur 1 de la figure 1.

A une étape préliminaire E0 de l'algorithme, une image tridimensionnelle est stockée sous forme de données numériques dans une mémoire de l'ordinateur 1. L'image tridimensionnelle est typiquement définie, comme décrit précédemment, par les coordonnées dans un repère tridimensionnel (O,x,y,z) de points représentatifs de l'intérieur et de la surface externe de chaque objet ou élément contenu dans l'image, et par les coordonnées phénoménologiques de ces points. La figure 3 illustre, à titre d'exemple seulement et dans un but de simplification, une image tridimensionnelle 6 dans laquelle un seul objet est représenté.

A une première étape E1, un nombre entier N supérieur à 1 de plans de coupe parallèles (ou sensiblement parallèles) P1 à PN sont définis dans le repère tridimensionnel (O,x,y,z). Les plans de coupe P1 à PN sont sélectionnés de telle sorte qu'ils aient une intersection non vide avec l'image tridimensionnelle 6. L'écartement d entre deux plans de coupe donnés peut être variable. Par exemple, si l'on souhaite restituer certaines zones de l'image 6 avec une meilleure précision, un plus grand nombre de plans de coupe peuvent être définis au niveau de ces zones. Un plan de référence, dit également plan de calcul d'hologramme, PR est par ailleurs défini. Le plan de référence PR est parallèle aux plans de coupe P1 à PN. Il peut être disjoint de l'image tridimensionnelle 6 ou intersecter cette dernière. Sa fonction sera expliquée plus loin.

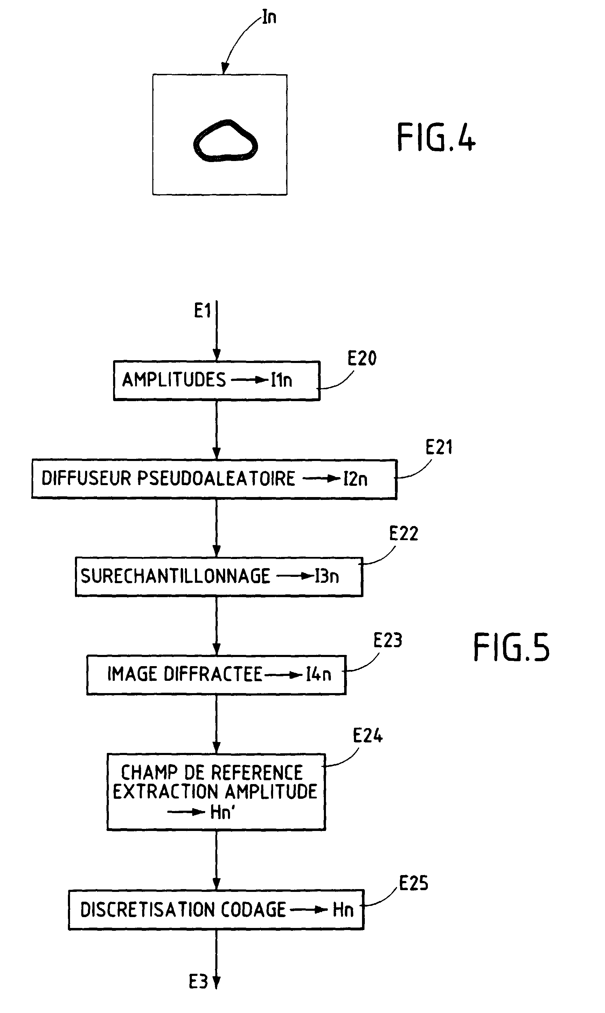

A l'étape E1, un calcul est ensuite mis en oeuvre pour déterminer les intersections respectives entre les plans P1 à PN et l'image tridimensionnelle 6. Ces intersections définissent des images bidimensionnelles I1 à IN, dont une est illustrée schématiquement à la figure 4. Chaque image bidimensionnelle In, où n est un entier compris entre I et N, est constituée par des points de l'image tridimensionnelle 6 qui sont inclus dans le plan de coupe correspondant Pn, et est décrite par une distribution bidimensionnelle réelle d'intensités fn(y,z) qui indique un niveau de gris pour chaque point (y,z) dans le plan Pn. L'étape E1 peut ainsi être assimilée à la décomposition de l'image tridimensionnelle 6 en une pluralité de tranches I1 à IN.

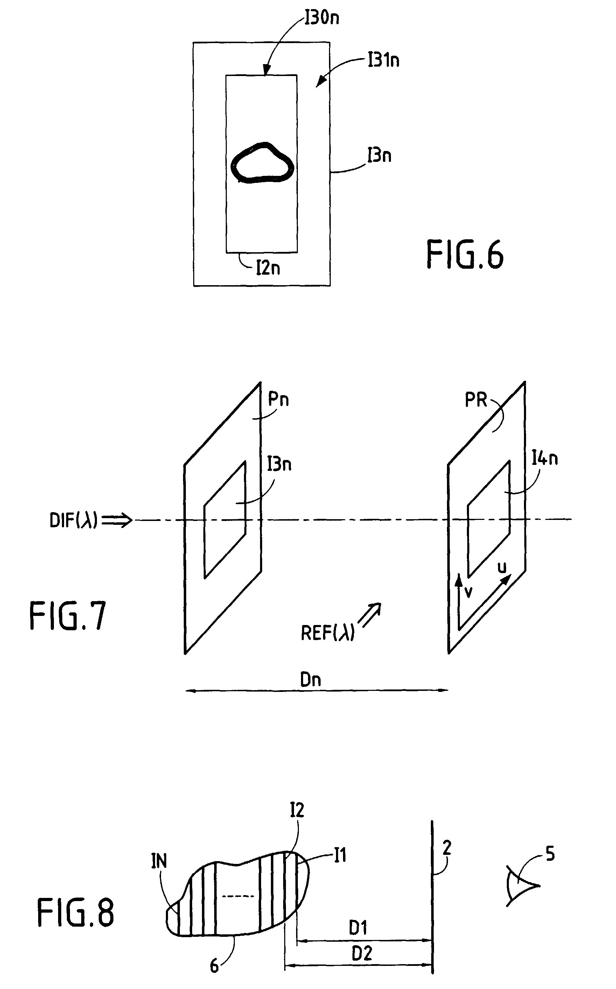

A une seconde étape E2 de l'algorithme, l'ordinateur 1 calcule, pour chaque image bidimensionnelle, ou tranche, I1 à IN obtenue à l'étape E1, et dans le plan de référence PR, un hologramme H1 à HN associé à cette image. Des méthodes, basées sur la transformation de Fourier, sont connues de l'homme du métier pour produire numériquement un hologramme à partir d'une image bidimensionnelle donnée. Toutefois, ces méthodes sont, pour la plupart, seulement capables de générer des hologrammes à une distance infinie de l'image bidimensionnelle. La présente invention utilise un algorithme amélioré par rapport aux méthodes conventionnelles pour mettre en oeuvre l'étape E2. En effet, l'étape E2 vise à calculer un hologramme Hn pour chaque image bidimensionnelle In précisément dans le plan de référence PR, c'est-à-dire en prenant en compte la distance Dn séparant l'image In (ou le plan Pn) du plan de référence PR. L'étape E2 selon l'invention est illustrée de façon détaillée à la figure 5, sous forme de sous-étapes E20 à E25.

A la sous-étape E20, chaque image bidimensionnelle In, décrite par la distribution d'intensités précitée fn(y,z), est transformée en une image bidimensionnelle transformée I1n qui est décrite par une distribution d'amplitudes, en calculant pour chaque point de l'image In la racine carrée de la valeur d'intensité correspondante.

A la sous-étape suivante E21, un diffuseur dit 〈〈 pseudoaléatoire 〉〉 est généré numériquement. Ce diffuseur consiste en une 〈〈 image 〉〉 ayant le même nombre de pixels que l'image bidimensionnelle In, et dont chaque pixel a une valeur d'intensité égale à 1 et une phase aléatoire. Chaque phase du diffuseur est alors associée à un pixel correspondant de l'image bidimensionnelle transformée I1n, pour transformer l'image I1n en une image dite 〈〈 complexe 〉〉 I2n dans laquelle un nombre complexe défini par une valeur d'amplitude et une valeur de phase est déterminé pour chaque pixel. Le diffuseur pseudoaléatoire permet entre autres d'éviter que l'hologramme résultant Hn présente de trop grandes disparités de niveaux d'amplitude en moyennant les valeurs d'amplitude de cet hologramme.

A la sous-étape E22, l'image complexe I2n obtenue à la sous-étape E21 est suréchantillonnée, c'est-à-dire cette image est incluse dans une image plus grande, comme montré à la figure 6. Une image I3n est ainsi formée, constituée dans une partie centrale I30n par l'image complexe I2n et dans une partie périphérique complémentaire I31n de pixels dont l'amplitude est choisie arbitrairement, par exemple égale à 0. Ce suréchantillonnage de l'image complexe I2n permet d'augmenter le nombre de pixels de l'hologramme résultant Hn et ainsi restituer une image tridimensionnelle avec une plus grande résolution.

A la sous-étape E23, l'image diffractée produite sur le plan de calcul d'hologramme PR lorsque l'image bidimensionnelle I3n est éclairée par une onde cohérente fictive DIF ayant pour longueur d'onde la longueur d'onde prédéterminée λ (cf. figure 7) est simulée numériquement. La sous-étape E23 consiste à calculer un produit de convolution associé à l'image complexe suréchantillonnée I3n. Ce produit de convolution est conforme à la théorie de la diffraction scalaire. A titre d'exemple, selon une formulation de la diffraction scalaire de type Rayleigh-Sommerfeld, les deux composantes du produit de convolution peuvent correspondre respectivement a un champ complexe représentatif de l'image complexe suréchantillonnée I3n et à un champ complexe représentatif d'une onde optique sphérique de longueur d'onde λ. D'autres types de produits de convolution pour le calcul d'une image diffractée sont toutefois connus de l'homme du métier. Le produit de convolution calculé à la sous-étape E23 utilise comme paramètres notamment la distance Dn précitée et la longueur d'onde λ.

Le calcul du produit de convolution est réalisé, selon l'invention, en appliquant une transformation complexe, dite également transformation rapide complexe, aux deux composantes du produit de convolution, en calculant le produit des transformées rapides complexes résultantes, puis en appliquant la transformation rapide complexe inverse de ladite transformation rapide complexe au produit précité des transformées rapides complexes.

De manière plus explicite, si CONV désigne le produit de convolution, C1 et C2 les deux composantes de celui-ci, et T la transformation rapide complexe, alors le produit de convolution s'écrit:

$$CONV = C1 \otimes C2 = T^{-1}T(C1 \otimes C2)$$

$$CONV = T^{-1}(T(C1)T(C2)).$$

Par transformation rapide complexe, on entend ici une transformation mathématique compatible avec la théorie de la diffraction optique scalaire, c'est-à-dire dont les fonctions transformées résultantes satisfont aux équations conventionnelles de la diffraction scalaire. La transformation rapide complexe doit en outre satisfaire la propriété selon laquelle la transformée rapide complexe d'un produit de convolution de deux composantes est égal au produit des transformées rapides complexes respectives desdites deux composantes. Des transformations rapides complexes qui remplissent les conditions ci-dessus sont la transformation de Fourier, la transformation de polynômes orthogonaux, la transformation de Paley, la transformation de Hadamar, la transformation de Walsh, la transformation de Hankel, la transformation de Karhunen-Loeve, la transformation d'ondelettes discrètes en multirésolution, et la transformation d'ondelettes adaptatives. D'autres transformations rapides complexes appropriées sont celles résultant d'une composition entre au moins deux des transformations précitées, telles qu'une composition entre la transformation de Walsh et la transformation d'Hadamar. L'application d'une composition de deux transformations données T1 et T2 à une image quelconque I est définie, de façon mathématiquement classique, par

$$(T1 \cdot T2)(I) = T1(T2(I)).$$

Chacune des transformations rapides complexes précitées peut être utilisée dans un cas spécifique. En particulier, le choix de la transformation rapide complexe est effectué en fonction de la distance Dn. Pour une grande distance Dn, une transformation de Fourier est appropriée. Pour une distance Dn plus faible, une transformation de Walsh convient mieux. Egalement, il a été trouvé que l'utilisation parmi les transformations rapides complexes susmentionnées d'une transformation autre que la transformation de Fourier donne de meilleurs résultats en termes de qualité de l'hologramme Hn que ceux obtenus par la transformation de Fourier.

La technique de calcul du produit de convolution telle qu'elle est décrite ci-dessus permet de simplifier les calculs et d'éviter l'approximation conventionnelle qui consiste à donner à la distance entre l'image bidimensionnelle et le plan de calcul d'hologramme la valeur infinie.

Il est par ailleurs à noter que la transformation de l'image bidimensionnelle In en une image complexe I2n facilite le calcul de l'image diffractée à la sous-étape E23, puisque la transformation rapide complexe est appliquée directement sur une image I3n décrite par une fonction complexe et non pas sur une image décrite par une fonction réelle.

A l'issue de la sous-étape E23, l'image diffractée, désignée par I4n, est décrite par un champ complexe constitué par un ensemble de nombres complexes dont chacun est associé à un point de l'image I4n. Chacun de ces nombres complexes dépend par ailleurs de l'image I3n prise dans son ensemble.

A la sous-étape suivante E24, un champ complexe simulant une onde optique de référence REF de longueur d'onde λ (cf. figure 7) dirigée vers le plan de calcul d'hologramme PR, est additionné, dans le plan PR, au champ complexe représentatif de l'image diffractée I4n, puis l'information d'amplitude contenue dans le champ complexe résultant est extraite afin de produire un champ d'interférences. L'addition des deux champs complexes précités est effectuée en additionnant, en chaque point de l'image diffractée I4n, le nombre complexe associé à ce point et la valeur, en ce même point, du champ complexe représentatif de l'onde de référence REF. Ledit champ d'interférences constitue un hologramme Hn' de l'image bidimensionnelle In.

L'hologramme Hn' d'une image bidimensionnelle donnée In obtenu à la sous-étape E24 est un champ, ou réseau, diffractif, qui est calculé pour une longueur d'onde particulière, à savoir la longueur d'onde d'émission λ de la source lumineuse 4. Cet hologramme, qui se présente à la sous-étape E24 sous forme virtuelle, c'est-à-dire est représenté dans l'ordinateur 1 par des données numériques, est tel que, s'il est reproduit physiquement par un écran holographique, un éclairage dudit écran holographique par une source lumineuse émettant à la longueur d'onde précitée λ permette de restituer, dans un ordre de diffraction donné, l'image bidimensionnelle initiale In.

Chaque hologramme Hn' obtenu à la sous-étape E24 est décrit numériquement dans l'ordinateur 1 par une fonction bidimensionnelle d'amplitudes An(u,v), où (u,v) désignent des coordonnées dans le plan de calcul d'hologramme PR qui correspondent par exemple à des fréquences spatiales d'image dans le cas où la transformation rapide complexe choisie à la sous-étape E23 est une transformation de Fourier. La fonction bidimensionnelle d'amplitudes An(u,v) est déduite, comme expliqué ci-dessus, de la fonction bidimensionnelle d'intensités fn(y,z) décrivant l'image bidimensionnelle In correspondante. En pratique, la fonction An(u,v) associée à un hologramme donné Hn' est calculée seulement pour une suite de points discrets $(u,v) = (u_n^k, v_n^q)$, où k et q sont des entiers. Toutefois, les valeurs que prennent les fonctions An(u,v) peuvent s'étaler continûment entre une valeur d'amplitude minimale et une valeur d'amplitude maximale.

A la sous-étape E25, les hologrammes Hn (n=1 à N) sont obtenus en discrétisant et codant les valeurs prises par les fonctions An(u,v), c'est-à-dire en associant à chaque valeur de ces fonctions une valeur discrète qui est codée numériquement par exemple sur 8 bits. A chaque couple de points discrets $(u_n^k, v_n^q)$ correspond alors une valeur d'amplitude discrète, représentative d'un niveau de gris, parmi 256 valeurs. Les amplitudes An(u,v) peuvent également être discrétisées plus simplement en associant, pour chaque valeur d'amplitude de An(u,v), la valeur discrète ⟨⟨ 0 ⟩⟩ si ladite valeur d'amplitude est inférieure à un seuil prédéterminé, ou la valeur discrète ⟨⟨ 1 ⟩⟩ si ladite valeur d'amplitude est supérieure au seuil prédéterminé.

Selon une variante de l'algorithme de la figure 5, les sous-étapes de production de l'image complexe E20 et E21, et/ou la sous étape de suréchantillonnage E22 sont supprimées. Selon une autre variante, la sous-étape de suréchantillonnage E22 est mise en oeuvre avant les sous-étapes de production de l'image complexe E20 et E21.

En référence de nouveau à la figure 2, à une étape E3 succédant à l'étape E2, l'ordinateur 1 commande le modulateur spatial de lumière 2 via le pilote 3, de manière à reproduire physiquement les hologrammes H1 à HN sur le modulateur spatial 2. Plus précisément, les hologrammes H1 à HN sont reproduits séquentiellement, selon un cycle prédétermine CL (cf. figure 1). Au cours d'un cycle CL, chaque hologramme Hn est reproduit par le modulateur spatial de lumière 2 pendant une période de temps prédéterminée. L'éclairage du modulateur spatial de lumière 2 par la source lumineuse 4 permet de restituer, pendant cette période de temps prédéterminée, l'image bidimensionnelle correspondante In à la distance Dn du modulateur spatial de lumière 2. Ainsi, au cours d'un cycle CL, toutes les images bidimensionnelles I1 à IN sont restituées séquentiellement aux distances respectives D1 à DN du modulateur 2, comme montré à la figure 8. La durée du cycle est suffisamment courte, typiquement de l'ordre de 50 ms, pour que l'observateur 5 perçoive, par fusion mentale, une image en trois dimensions correspondant à l'image 6 stockée dans l'ordinateur 1. Il est à noter que, grâce à la technique de calcul d'hologramme utilisée par la présente invention et permettant de calculer un hologramme à une distance bien définie, l'ordre dans lequel les hologrammes H1 à HN sont reproduits par le modulateur spatial de lumière 2 au cours d'un cycle importe peu.

Par ailleurs, une conséquence du dispositif selon l'invention est que l'image tridimensionnelle que perçoit l'observateur 5 est transparente. Cette caractéristique est extrêmement avantageuse pour les applications médicales où il est important de pouvoir visualiser l'intérieur des organes.

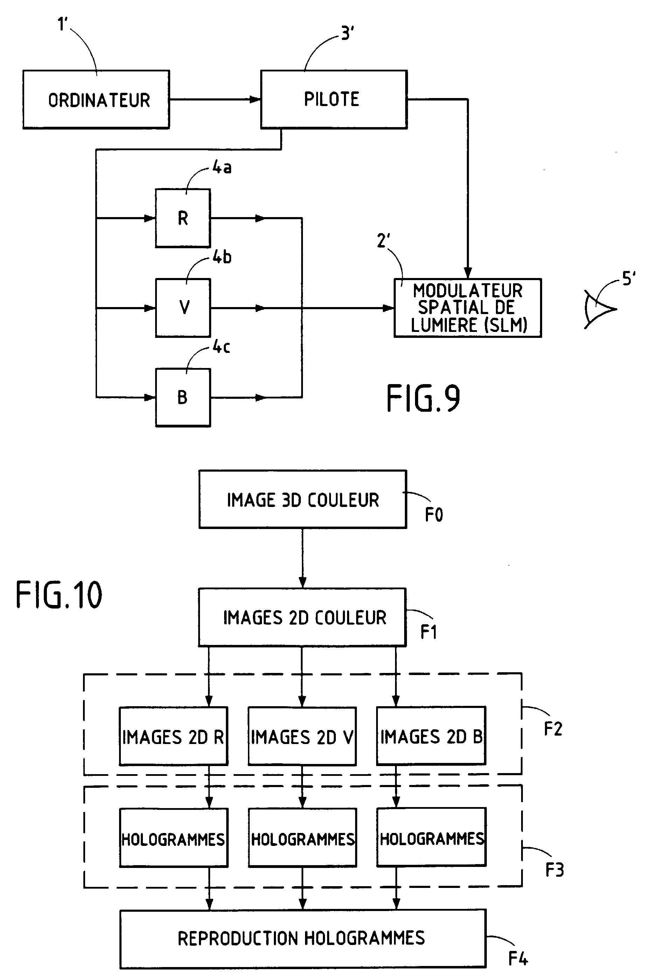

La figure 9 montre un second mode de réalisation du dispositif holographique selon l'invention. Ce mode de réalisation diffère de celui illustré à la figure 1 en ce que la source lumineuse 4 est remplacée par trois sources lumineuses 4a, 4b, et 4c émettant respectivement de la lumière cohérente rouge, verte et bleue.

La figure 10 montre un procédé de restitution d'une image tridimensionnelle en couleur, mis en oeuvre par le dispositif holographique de la figure 9.

A une étape préliminaire F0 du procédé, une image tridimensionnelle en couleur est stockée sous forme de données numériques dans l'ordinateur 1'. Les données numériques comprennent une table thermo-optique, par exemple du type table JANA, qui contient notamment les informations de couleur de l'image. A partir de la table thermo-optique, on associe à chaque point de l'image tridimensionnelle des caractéristiques thermo-optiques de colorimétrie qui dépendent de la longueur d'onde et qui définissent la couleur du point pour chaque longueur d'onde.

A une première étape F1, l'image tridimensionnelle en couleur est décomposée en une pluralité d'images bidimensionnelles en couleur, d'une manière comparable à l'étape E1 illustrée à la figure 2, c'est-à-dire en déterminant les intersections entre un nombre entier M supérieur à 1 de plans parallèles et l'image tridimensionnelle.

A une étape suivante F2, chaque image bidimensionnelle en couleur obtenue à l'étape F1 est décomposée en trois images de couleurs rouge, verte et bleue respectivement, suivant les principes connus de la colorimétrie.

A une étape F3, des hologrammes sont produits numériquement pour respectivement les Mx3 images bidimensionnelles obtenues à l'étape F2. L'hologramme associé à une image bidimensionnelle donnée, de couleur rouge, verte ou bleue, est calculé comme décrit précédemment en référence à la figure 5 pour la longueur d'onde de la source lumineuse 4a, 4b ou 4c respectivement.

A une étape F4, les Mx3 hologrammes générés à l'étape F3 sont reproduits physiquement par le modulateur spatial de lumière 2' de façon séquentielle et selon un cycle prédéterminé. Au cours d'un cycle, sont reproduits successivement M séquences d'hologrammes, à savoir:

- une première séquence constituée par trois hologrammes correspondant aux images bidimensionnelles rouge, verte, et bleue obtenues par la décomposition à l'étape F2 d'une première image bidimensionnelle en couleur ;

- une seconde séquence constituée par trois hologrammes correspondant aux images bidimensionnelles rouge, verte et bleue obtenues par la décomposition à l'étape F2 d'une seconde image bidimensionnelle en couleur ;

$$\begin{vmatrix} & & \\ & & \\ & & \end{vmatrix}$$

- une $M^{ième}$ séquence constituée par trois hologrammes correspondant aux images bidimensionnelles rouge, verte et bleue obtenues par la décomposition à l'étape F2 d'une $M^{ième}$ image bidimensionnelle en couleur.

Les sources lumineuses 4a, 4b et 4c sont commandées de manière à émettre de la lumière alternativement, en synchronisme avec la reproduction des hologrammes. Plus particulièrement, la source 4a est activée seulement lorsqu'un hologramme correspondant à une image bidimensionnelle rouge est reproduit, tandis que les sources 4b et 4c sont respectivement activées seulement lorsqu'un hologramme correspondant à une image bidimensionnelle verte et un hologramme correspondant à une image bidimensionnelle bleue sont reproduits. Ainsi, l'image tridimensionnelle est restituée en couleur par multiplexage temporel.

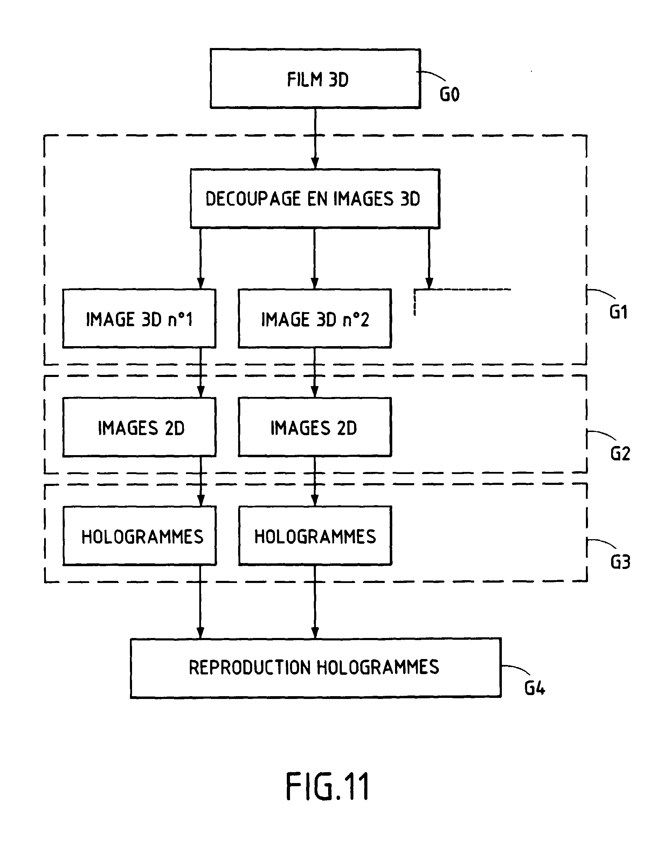

La figure 11 illustre un procédé de restitution d'un film vidéo en trois dimensions conforme à la présente invention. Le film en trois dimensions est préalablement mémorisé dans une mémoire de l'ordinateur sous forme de données numériques à une étape G0.

A une étape G1, le film en trois dimensions est découpé en une séquence d'images en trois dimensions. Des étapes G2 et G3, réalisant les mêmes fonctions que les étapes E1 et E2 de la figure 2 ou que les étapes F1 à F3 de la figure 10 (lorsque le film est en couleur) sont ensuite mises en oeuvre pour produire des hologrammes.

A une étape G4, ces hologrammes sont reproduits par le modulateur spatial de lumière séquentiellement et selon un cycle d'image prédéterminé. Au cours d'un cycle d'image, les hologrammes correspondant à une image tridimensionnelle du film sont reproduits séquentiellement. Ainsi, chaque image tridimensionnelle du film est restituée pendant un cycle d'image de sorte que l'observateur peut visualiser le film animé en couleur stocké dans l'ordinateur.

Par ailleurs, il est possible, selon l'invention, de ne restituer que certaines parties de l'image tridimensionnelle ou du film vidéo stocké dans l'ordinateur, afin de visualiser celles-ci de manière précise. Ainsi, dans l'application particulière de l'invention dans le domaine médical, on peut sélectionner dans l'image tridimensionnelle numérique, des organes ou parties d'organe à visualiser. La sélection peut par exemple être effectuée lors de l'étape de génération des images bidimensionnelles en choisissant des plans de coupe dans les zones de l'image que l'on souhaite restituer.

Un autre avantage important des procédé et dispositif selon la présente invention consiste en la possibilité de réaliser divers calculs numériques, par exemple les calculs d'hologrammes aux étapes E2, F3 et G3, en parallèle, afin de réduire les temps de calcul.

**Revendications**

1. Procédé pour restituer au moins une partie d'une image tridimensionnelle, ladite image tridimensionnelle (6) étant représentée par des données numériques et définie dans un espace géométrique à trois dimensions (O,x,y,z), caractérisé en ce qu'il comprend les étapes suivantes :

produire par calcul (E1) un ensemble d'images bidimensionnelles (I1 - IN) obtenues par détermination, dans l'espace géométrique à trois dimensions, des intersections respectives entre une pluralité de plans de coupe (P1 - PN) et l'image tridimensionnelle (6),
produire par calcul (E2) un hologramme pour chacune des images bidimensionnelles, et reproduire (E3) successivement les hologrammes des images bidimensionnelles sur un modulateur spatial de lumière (2) éclairé par une source lumineuse (4).

2. Procédé conforme à la revendication 1, selon lequel ladite source lumineuse (4) est une source lumineuse cohérente émettant à une longueur d'onde prédéterminée, et lesdits hologrammes des images bidimensionnelles sont calculés pour ladite longueur d'onde.

3. Procédé conforme à la revendication 1, selon lequel ladite image tridimensionnelle est une image en couleur, ledit procédé comprenant en outre une étape (F2) consistant à décomposer chacune desdites images bidimensionnelles en des images bidimensionnelles de couleur rouge, verte et bleue (RVB) respectivement, ladite étape (F3) de produire par calcul un hologramme pour chacune des images bidimensionnelles consistant, pour une image bidimensionnelle de couleur rouge, verte, ou bleue donnée, à produire un hologramme pour une longueur d'onde correspondant à la couleur de l'image bidimensionnelle donnée, et ladite étape (F4) de reproduire successivement les hologrammes consistant à reproduire les hologrammes des images bidimensionnelles successivement sur ledit modulateur spatial de lumière tandis que ce dernier est éclairé alternativement par des ondes optiques cohérentes de couleur rouge, verte et bleue respectivement en fonction de la couleur pour laquelle l'hologramme reproduit sur le modulateur spatial de lumière a été calculé.

4. Procédé conforme à l'une quelconque des revendications 1 à 3, selon lequel le modulateur spatial de lumière (2) a un pas de pixels (pitch) inférieur à 10 μm et de préférence voisin de 1 μm suivant au moins deux directions distinctes.

5. Procédé conforme à l'une quelconque des revendications 1 à 4, selon lequel le modulateur spatial de lumière (2) est un écran à cristaux liquides.

6. Procédé conforme à l'une quelconque des revendications 1 à 5, selon lequel lesdits plans de coupe (P1- PN) sont parallèles entre eux.

7. Procédé conforme à l'une quelconque des revendications 1 à 6, selon lequel ladite étape (E3) de reproduire successivement les hologrammes consiste à reproduire sur le modulateur spatial de lumière (2) une séquence (H1 - HN) constituée par lesdits hologrammes, ladite séquence ayant une durée n'excédant pas 50 ms.

8. Procédé conforme à l'une quelconque des revendications 1 à 6, selon lequel ladite étape (E3) de reproduire successivement les hologrammes consiste à reproduire sur le modulateur spatial de lumière (2), de manière répétée, une séquence (H1-HN) constituée par lesdits hologrammes, ladite séquence ayant de préférence une durée n'excédant pas 50 ms.

9. Procédé conforme à l'une quelconque des revendications 1 à 8, selon lequel, à ladite étape (E2) de produire par calcul un hologramme pour chacune des images bidimensionnelles, les hologrammes des images bidimensionnelles sont calculés dans un plan prédéterminé (PR) situé à une distance finie de ladite pluralité de plans de coupe (P1 - PN) et de préférence parallèle à ces derniers.

10. Procédé conforme à l'une quelconque des revendications 1 à 9, selon lequel lesdites images bidimensionnelles sont définies par des fonctions réelles respectives et ladite étape (E2) de produire par calcul un hologramme pour chacune des images bidimensionnelles comprend les étapes suivantes pour une image bidimensionnelle donnée (In) :

transformer (E20, E21) l'image bidimensionnelle donnée définie par la fonction réelle correspondante en une image bidimensionnelle complexe définie par une fonction complexe,
suréchantillonner (E22) l'image complexe,
simuler (E23) la production d'une image diffractée (I4n) résultant de la diffraction d'une onde optique (DIF) par l'image complexe suréchantillonnée (I3n),
additionner (E24) un champ complexe représentatif d'une onde optique de référence (REF) à l'image diffractée résultante (I4n), et
coder (E25) des valeurs prises par l'amplitude de la somme dudit champ complexe et de l'image diffractée résultante (I4n) afin de produire l'hologramme (Hn) associé à ladite image bidimensionnelle donnée (In).

11. Procédé conforme à la revendication 10, selon lequel ladite étape (E23) de simuler consiste à calculer un produit de convolution, associé à l'image complexe suréchantillonnée, de deux composantes, en appliquant la transformation inverse d'une transformation complexe prédéterminée au produit des transformées complexes respectives desdites deux composantes.

12. Procédé conforme à la revendication 11, selon lequel ladite transformation complexe prédéterminée est l'une des transformations complexes suivantes : transformation de Fourier, transformation de Walsh, transformation de Hankel, transformation de polynômes orthogonaux, transformation de Hadamar, transformation de Karhunen-Loeve, transformation d'ondelettes discrètes en mutirésolution, transformation d'ondelettes adaptatives, et transformation résultant d'une composition d'au moins deux des transformations ci-dessus.

13. Procédé pour restituer un film vidéo en trois dimensions constitué par une séquence d'images tridimensionnelles représentées par des données numériques, caractérisé en ce qu'il consiste à appliquer à chaque image tridimensionnelle de ladite séquence le procédé conforme à l'une quelconque des revendications 1 à 12, de telle sorte que, pour chaque image tridimensionnelle, des hologrammes correspondant à cette image soient reproduits successivement sur un modulateur spatial de lumière pendant un cycle d'image prédéterminé.

14. Dispositif pour restituer au moins une partie d'une image tridimensionnelle, ladite image tridimensionnelle (6) étant représentée par des données numériques et définie dans un espace géométrique à trois dimensions (O,x,y,z), caractérisé en ce qu'il comprend :

un moyen (1) pour mémoriser l'image tridimensionnelle,
un moyen (1) pour produire par calcul un ensemble d'images bidimensionnelles obtenues par détermination, dans l'espace géométrique à trois dimensions, des intersections respectives entre une pluralité de plans de coupe (P1 - PN) et l'image tridimensionnelle (6),
un moyen (1) pour produire par calcul un hologramme pour chacune des images bidimensionnelles,
un modulateur spatial de lumière (2) pour reproduire successivement les hologrammes des images bidimensionnelles, et
une source lumineuse (4) pour éclairer le modulateur spatial de lumière lors de la reproduction par ce dernier desdits hologrammes.

15. Dispositif conforme à la revendication 14, dans lequel ladite source lumineuse (4) est une source lumineuse cohérente émettant à une longueur d'onde prédéterminée, et lesdits hologrammes des images bidimensionnelles sont calculés pour ladite longueur d'onde.

16. Dispositif conforme à la revendication 14, dans lequel ladite image tridimensionnelle est une image en couleur, ledit dispositif comprenant en outre un moyen (1') pour décomposer chacune desdites images bidimensionnelles en des images bidimensionnelles de couleur rouge, verte et bleue (RVB) respectivement, ledit moyen pour produire par calcul un hologramme pour chacune des images bidimensionnelles comprenant un moyen (1') pour produire, pour une image bidimensionnelle de couleur rouge, verte ou bleue donnée, un hologramme pour une longueur d'onde correspondant à la couleur de l'image bidimensionnelle donnée, et ledit modulateur spatial de lumière (2') reproduisant les hologrammes des images bidimensionnelles successivement tandis qu'il est éclairé alternativement par des sources lumineuses (4a, 4b, 4c) émettant des ondes optiques cohérentes de couleur rouge, verte et bleue respectivement en fonction de la couleur pour laquelle l'hologramme reproduit sur le modulateur spatial de lumière (2') a été calculé.

17. Dispositif conforme à l'une quelconque des revendications 14 à 16, dans lequel le modulateur spatial de lumière (2) a un pas de pixels (pitch) inférieur à 10 µm et de préférence voisin de 1 µm suivant au moins deux directions distinctes.

18. Dispositif conforme à l'une quelconque des revendications 14 à 17, dans lequel le modulateur spatial de lumière (2) est un écran à cristaux liquides.

19. Dispositif conforme à l'une quelconque des revendications 14 à 18, dans lequel lesdits plans de coupe (P1 - PN) sont parallèles entre eux.

20. Dispositif conforme à l'une quelconque des revendications 14 à 19, dans lequel ledit modulateur spatial de lumière (2) reproduit une séquence (H1 - HN) constituée par lesdits hologrammes, ladite séquence ayant une durée n'excedant pas 50 ms.

21. Dispositif conforme à l'une quelconque des revendications 14 à 19, dans lequel ledit modulateur spatial de lumière (2) reproduit de manière répétée une séquence (H1 HN) constituée par lesdits hologrammes, ladite séquence ayant de préférence une durée n'excédant pas 50 ms.

22. Dispositif conforme à l'une quelconque des revendications 14 à 21, dans lequel ledit moyen pour produire par calcul un hologramme pour chacune des images bidimensionnelles comprend un moyen (1) pour calculer les hologrammes des images bidimensionnelles dans un plan prédéterminé (PR) situé à une distance finie de ladite pluralité de plans de coupe (P1 - PN) et de préférence parallèle à ces derniers.

23. Dispositif conforme à l'une quelconque des revendications 14 à 22, dans lequel lesdites images bidimensionnelles sont définies par des fonctions réelles respectives et ledit moyen pour produire par calcul un hologramme pour chacune des images bidimensionnelles comprend :

   un moyen (1) pour transformer (E20, E21) une image bidimensionnelle donnée (In) définie par la fonction réelle correspondante en une image bidimensionnelle complexe définie par une fonction complexe,

   un moyen (1) pour suréchantillonner (E22) l'image complexe,

   un moyen (1) pour simuler (E23) la production d'une image diffractée (I4n) résultant de la diffraction d'une onde optique (DIF) par l'image complexe suréchantillonnée (I3n),

   un moyen (1) pour additionner (E24) un champ complexe représentatif d'une onde optique de référence (REF) à l'image diffractée résultante (I4n), et

   un moyen (1) pour coder (E25) des valeurs prises par l'amplitude de la somme dudit champ complexe et de l'image diffractée résultante (I4n) afin de produire l'hologramme (Hn) associé à ladite image bidimensionnelle donnée (In).

24. Dispositif conforme à la revendication 23, dans lequel ledit moyen pour simuler la production d'une image diffractée comprend un moyen (1) pour calculer un produit de convolution, associé à l'image complexe suréchantillonnée, de deux composantes, en appliquant la transformation inverse d'une transformation complexe prédéterminée au produit des transformées complexes respectives desdites deux composantes

25. Dispositif conforme à la revendication 24, dans lequel ladite transformation complexe prédéterminée est l'une des transformations complexes suivantes : transformation de Fourier, transformation de Walsh, transformation de Hankel, transformation de polynômes orthogonaux, transformation de Hadamar, transformation de Karhunen-Loeve, transformation d'ondelettes discrètes en mutirésolution, transformation d'ondelettes adaptatives, et transformation résultant d'une composition d'au moins deux des transformations ci-dessus.

26. Dispositif pour restituer un film vidéo en trois dimensions constitué par une séquence d'images tridimensionnelles représentées par des données numériques, caractérisé en ce qu'il comprend un moyen (1) pour appliquer chaque image tridimensionnelle de ladite séquence au dispositif conforme à l'une quelconque des revendications 14 à 25, de telle sorte que, pour chaque image tridimensionnelle, des hologrammes correspondant à cette image soient reproduits sur un modulateur spatial de lumière pendant un cycle d'image prédéterminé.

FIG.1

FIG.2

FIG.3

In

## FIG.4

E1

| AMPLITUDES $\longrightarrow$ I1n | E20 |

| DIFFUSEUR PSEUDOALEATOIRE $\longrightarrow$ I2n | E21 |

| SURECHANTILLONNAGE $\longrightarrow$ I3n | E22 |

## FIG.5

| IMAGE DIFFRACTEE $\longrightarrow$ I4n | E23 |

| CHAMP DE REFERENCE EXTRACTION AMPLITUDE $\longrightarrow$ Hn' | E24 |

| DISCRETISATION CODAGE $\longrightarrow$ Hn | E25 |

E3

I30n

I31n

I3n

I2n

FIG.6

Pn

PR

I3n

I4n

DIF(λ) ⟹

u

v

REF(λ)

FIG.7

Dn

I2

I1

IN

2

5

FIG.8

6

D1

D2

**FIG.9**

**FIG.10**

```
┌─────────────────────────┐
│        FILM 3D          │  G0
└─────────────────────────┘
             │
             ▼
┌─────────────────────────────────────┐
│      DECOUPAGE EN IMAGES 3D         │
└─────────────────────────────────────┘
      │           │           │
      ▼           ▼           ▼
┌──────────┐ ┌──────────┐
│IMAGE 3D  │ │IMAGE 3D  │        G1
│  n°1     │ │  n°2     │
└──────────┘ └──────────┘
      │           │
      ▼           ▼
┌──────────┐ ┌──────────┐
│IMAGES 2D │ │IMAGES 2D │        G2
└──────────┘ └──────────┘
      │           │
      ▼           ▼
┌──────────┐ ┌──────────┐
│HOLOGRAMMES│ │HOLOGRAMMES│      G3
└──────────┘ └──────────┘
      │           │
      ▼           ▼
┌─────────────────────────────────────┐
│      REPRODUCTION HOLOGRAMMES        │  G4
└─────────────────────────────────────┘
```

FIG.11

Office européen
des brevets

**RAPPORT DE RECHERCHE EUROPEENNE**

Numéro de la demande

EP 98 40 3111

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 590 913 A (FUJITSU LTD) 6 avril 1994<br><br>* page 2, ligne 57 - page 3, ligne 7 *<br>* page 6, ligne 29 - ligne 38 *<br>* page 6, ligne 47 - ligne 53 *<br>* page 10, ligne 34 - ligne 53 *<br>* page 11, ligne 7 - ligne 29 *<br>* page 12, ligne 28 - page 13, ligne 5 *<br>* figures 13,16 *<br>--- | 1-7,<br>14-20 | G03H1/08<br>G03H1/26 |
| A | EP 0 589 558 A (FUJITSU LTD) 30 mars 1994<br><br>* page 5, ligne 33 - ligne 50 *<br>* page 8, ligne 53 - page 9, ligne 7 *<br>* page 9, ligne 21 - ligne 43 *<br>* page 10, ligne 41 - page 11, ligne 10 *<br>* figures 6,8 *<br>--- | 1-7,<br>14-28 | |
| A | US 3 614 426 A (DONZELLE GERALD) 19 octobre 1971<br>* colonne 2, ligne 7 - ligne 25 *<br>* figures 1,2 *<br>--- | 1,6,14,<br>19 | |
| D,A | US 5 668 648 A (SAITO TUTOMU ET AL) 16 septembre 1997<br>* colonne 3, ligne 23 - ligne 63 *<br>--- | 1,14 | **DOMAINES TECHNIQUES RECHERCHES (Int.Cl.6)**<br><br>G03H |
| A | PATENT ABSTRACTS OF JAPAN vol. 098, no. 001, 30 janvier 1998<br>& JP 09 244520 A (OLYMPUS OPTICAL CO LTD), 19 septembre 1997<br>* abrégé *<br>----- | 1,6,14,<br>19 | |

Le présent rapport a été établi pour toutes les revendications

| Lieu de la recherche | Date d'achèvement de la recherche | Examinateur |
|---|---|---|
| LA HAYE | 28 avril 1999 | Krametz, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**             EP 98 40 3111

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

28-04-1999

| Document brevet cité au rapport de recherche | | Date de publication | Membre(s) de la famille de brevet(s) | | Date de publication |
|---|---|---|---|---|---|
| EP 0590913 | A | 06-04-1994 | JP | 6110372 A | 22-04-1994 |
| | | | CA | 2105446 A | 31-03-1994 |
| | | | DE | 69315793 D | 29-01-1998 |
| | | | DE | 69315793 T | 09-04-1998 |
| | | | US | 5561537 A | 01-10-1996 |
| EP 0589558 | A | 30-03-1994 | JP | 6067591 A | 11-03-1994 |
| | | | CA | 2103950 A,C | 22-02-1994 |
| | | | DE | 69314900 D | 04-12-1997 |
| | | | DE | 69314900 T | 05-03-1998 |
| | | | US | 5644414 A | 01-07-1997 |
| | | | US | 5570208 A | 29-10-1996 |
| | | | US | 5852504 A | 22-12-1998 |
| | | | US | 5717509 A | 10-02-1998 |
| US 3614426 | A | 19-10-1971 | DE | 1929445 A | 08-01-1970 |
| | | | FR | 1582104 A | 26-09-1969 |
| | | | GB | 1261790 A | 26-01-1972 |
| US 5668648 | A | 16-09-1997 | JP | 5150701 A | 18-06-1993 |
| | | | JP | 5150702 A | 18-06-1993 |
| | | | US | 5347375 A | 13-09-1994 |

EPO FORM P0460

Pour tout renseignement concernant cette annexe : voir Journal Officiel de l'Office européen des brevets, No.12/82